# EUROPEAN PATENT APPLICATION

(11) **EP 1 342 437 A1**
(43) Date of publication of application: **10.09.2003**
(21) Application number: 00967918.4
(22) Date of filing: 09.10.2000
(51) Int. Cl.: A47C 31/00

(54) **METHOD AND MACHINE FOR MANUFACTURING AN AUXILIARY ELEMENT FOR THE PRODUCTION OF AN OUTER ENVELOPING ELEMENT FOR COVERING A MATTRESS AND THE PRODUCT THUS OBTAINED**

(71) Applicant: Masias Maquinaria, SA, E-17857 Sant Joan les Fonts (Girona) (ES)
(72) Inventor: MASIAS, LLuis, E-17857 Sant Joan les Fonts (Girona) (ES); MASIAS, Esmeragdo, E-17857 Sant Joan les Fonts (Girona) (ES)
(74) Representative: Manresa Val, Manuel
(86) International application number: ES0000387
(87) International publication number: WO02030243

(57) **Abstract**

Process and machine for manufacturing an auxiliary element for producing an outer wrap for covering a mattress, of the kind which contains a layer (3) of sponge rubber and a layer (4) of textile fibre joined to a covering fabric (5) comprising the steps of:
defibering and cutting off a material from the recovery of used covering outer wraps (6) of mattresses and/or waste of manufacturing new covering outer wraps (6) for mattresses, obtaining a size of pieces of sponge rubber in the defibered and cut off material (6a) contributing with a fluffy consistence;
laying the defibered and cut off material (6a) as a blanket (11) forming a layer of fluffy material;
depositing a thin layer of sponge rubber (12) on said blanket (11);
depositing a layer of textile fibre (13) on said thin layer of sponge rubber (12); and
consolidating by die cut or basting stitches a junction between said blanket (11), layer (12) and layer (13), obtaining an auxiliary element (14) which is handleable and can be thereafter joined to a covering fabric (15).

## Description

### Field of the art

This invention relates to a process and a machine for manufacturing an auxiliary element constituting an internal comfort element, adapted for producing an outer wrap for covering a mattress, said auxiliary element comprising a layer of fluffy and heat insulating material as a defibered and cut off blanket obtained from the recovery of used covering outer wraps of mattresses and/or waste of manufacturing new outer wraps for mattresses. This invention also relates to that auxiliary element for producing an outer wrap for covering the mattress.

### Technical background

The mattresses, in general, and the spring mattresses in particular are covered with an outer wrap for covering them which completely wraps the top part, the lower part and the sides of the mattress. This covering outer wrap is usually called "lap" in the sector of manufacture of mattresses and constitutes a layer of external comfort having a fluffy and pleasant touch.

The said lap generally comprises, in a conventional mattress and regardless of the nature of its core, an interlining sheet such as acetate, as a base layer, on which will be subsequently arranged a layer of light nonwoven fabric , a layer of sponge rubber, such as polyurethane foam, having a variable thickness, a layer of textile fibre such as wadding, polyester, wool or cotton, having a variable thickness and a top layer of covering fabric, such as Jacquard fabric. Depending on the quality of the mattress, maybe not all above layers are present or some are duplicated or even there exists additional layers. The thickness of said layers varies depending on the quality of the product, although in general the layers of sponge rubber and textile fibres are the thickest and the ones which provide the wished fluffy consistence. It is also usual that a same mattress shows, for example, one side for summer in which the textile fibre layer is of cotton and the other side for winter in which said layer is of wool.

The conventional process of manufacture of said covering outer wrap, or cover, of the prior art consists in non-stop feeding every and each material which constitutes said layers in superposed sheets way, for example, coming from coils to a wadding machine which join them by sewing them, typically making a plurality of straight line parallel stitches or more or less sinuous latticed stitches. This way a laminar band of said covering outer wrap is obtained which can be stored in coils for being cut thereafter at the size of the different parts which are necessary to make the mattress cover. In this process of cutting, it is unavoidable that losses of material occur because pieces are produced which are too small in order a complete part can be obtained from them. Those pieces, in the conventional process have no use and they are cast off, which involves a very high economic cost and an aggression to the environment because some of the materials which constitute them are not easily degradable and at the end they are burnt with an unwanted release of fumes obnoxious to the atmosphere.

On the other hand, the used mattresses which are cast off at the end of their service life also pose problems for their elimination. Although it is relatively easy and quick to withdraw the lap from the core of the mattress, the withdrawal of the different layers which constitute the lap is a two laborious process to be economically workable, therefore said covering outer wraps or covers are finally also burnt with the above mentioned unwanted effects for the environment.

An object of this invention is to contribute with a process and a machine for manufacturing an auxiliary element for producing a covering outer wrap of a mattress using for constituting to a great extent a material obtained from the recovery of used covering outer wraps of mattresses and/or waste of manufacturing new covering outer wraps for mattresses.

Another object of this invention is to contribute with an auxiliary element for producing a covering external wrap for a mattress comprising a layer of fluffy and heat insulating material essentially obtained from the recovery of used covering outer wraps of mattresses and/or waste of manufacturing new covering outer wraps for mattresses.

### Description of the invention

These objects are achieved, according to this invention by contributing with a process which comprises the steps of:
defibering and cutting off a material from the recovery of used covering outer wraps of mattresses and/or waste of manufacturing new covering outer wraps for mattresses, said wraps including sponge rubber so that a size of pieces of recovered sponge rubber sufficiently large is obtained in order the defibered and cut off material obtained has a fluffy consistence;
laying the defibered and cut off material obtained forming a blanket of defibered and cut off material having a wished thickness adapted to carry out the function of said layer which is at least one of a fluffy and heat insulating material in said auxiliary element.
depositing a thin layer of sponge rubber such as polyurethane foam on said blanket of defibered and cut off material;
depositing a layer of textile fibre such as wadding, polyester, wool or cotton, having a wished thickness on said thin layer of sponge rubber; and
consolidating a junction between said blanket of defibered and cut off material, said thin layer of sponge rubber and said layer of textile fibre, for obtaining said auxiliary element so that it is handleable and can be thereafter joined to at least said covering fabric for producing said outer wrap for covering the mattress.

Advantageously, after the step of cutting off and defibering and before forming a blanket with said recovery material, a dedusting step is carried out.

Although with these steps a lap can be obtained which meets the requirements of the industry, the process according to this invention includes other steps aiming to offer a best finished resulting product. Preferably a step is included for arranging an interlining sheet, such as acetate, under said blanket of defibered and cut off material prior to the steps of depositing the thin layer of sponge rubber and the textile fibre layer on said blanket of defibered and cut off material, joining said interlining sheet together with the remaining layers in said step of consolidating the junction to each other of said layers. It is also preferable to carry out a step which comprises to lengthwise cutting side edges of the blanket of defibered and cut off material to leave them with the wished width for the auxiliary element before further layers are added to it.

The said consolidation of the junction of the different layers can be carried out by cut die or bay sewing basting stitches. It is preferred to die cut because it offers a sufficient consolidation of the junction without using threads which is an advantage as well from the technical as from the economic standpoint.

All the steps are carried out in a non-stop process, therefore the auxiliary element is also non-stop obtained and it can be coiled in coils. The starting material, that is to say the material from the recovery of used covering outer wraps of mattresses and/or the waste of manufacturing new covering outer wraps for mattresses, which, in general, comprises every and all the following layers: an interlining sheet, such as acetate, as a base layer; a layer of light nonwoven fabric; a layer of sponge rubber such as polyurethane foam having a variable thickness; a layer of textile fibre , such as wadding, polyester, wool or cotton, having a variable thickness; and a top layer of covering fabric, such as Jacquard fabric, joined by sewing them, is used without prior separation of said layers in said cutting off step.

This invention also contributes with a machine for implementing above process. The machine of this invention comprises a feeding tower for a non-stop laying of a defibered and cut off material forming a blanket of defibered and cut off material having a wished thickness. This defibered and cut off material comes from a defibering and cutting off apparatus fed with said material coming from the recovery of used covering outer wraps of mattresses and/or the waste of manufacturing new covering outer wraps for mattresses, said wraps including sponge rubber. said defibering and cutting off apparatus which comprises a series of tangent rollers with prongs is fitted in order the defibered and cut off material obtained has a size of the pieces of sponge rubber sufficiently large to offer a fluffy consistence. A grinding up to a size of particle of sponge rubber too small would provide as result an easily compactible material, lacking fluffiness. On the other hand, cutting off to a size of the pieces of sponge rubber too big could make that the individual pieces can be noted when touching.

The machine of this invention also comprises a non-stop feeder of a thin layer of sponge rubber, such as polyurethane foam, on said blanket of defibered and cut off material; a non-stop feeder of a textile fibre layer, such as wadding, polyester, wool or cotton, having the wished thickness, on said thin layer of sponge rubber; a consolidating device, for consolidating a junction between said blanket of defibered and cut off material, said thin layer of sponge rubber and said layer of textile fibre, for obtaining said auxiliary element which can be thereafter joined at least to said covering fabric for producing said covering outer wrap for the mattress; and finally, a coiler to coil the auxiliary element obtained in a non-stop process into a coil although alternatively plates can be cut stackable on a pallet. The materials of the thin layer of sponge rubber and of the layer of textile fibre are advantageously non stop fed from the coils.

Preferably, the machine of this invention comprises in addition a non stop feeder of an interlining sheet, such as acetate, under said blanket of defibered and cut off material before the area where said feeders respectively deposit the thin layer of sponge rubber and the layer of textile fibre on the blanket of defibered and cut off material. Logically , in this case, said sheet of interlining arrives together with the remaining layers to said consolidating device, where a consolidation of the junction between all of them is carried out.

Preferably, the consolidating device is a die cut machine which carries out said consolidation of the junction by tangling some fibres of some layers with the others at the points of die cut without using threads although it could also be, for example a machine for sewing basting stitches.

Another device which the machine of this invention preferably incorporates is a cutting device for lengthwise cutting side edges of the blanket of defibered and cut off material leaving it at the width wished for the auxiliary element, said cutting device being located in a location before the area where the feeders respectively deposit the thin layer of sponge rubber and the layer of textile fibre on said blanket of defibered and cut off material.

The auxiliary element for producing an outer wrap for covering the mattress, constituting an element of internal comfort, is of the type which integrates at least a layer of a fluffy and heat insulating material which can be joined at least to a covering fabric for producing said outer wrap for covering the mattress and is characterized in that it comprises said layer of a fluffy and heat insulating material as a blanket of defibered and cut off material having the wished thickness, composed of a defibered and cut off material having a wished thickness, composed of a material coming from the recovery of used covering outer wraps of mattresses and/or the waste of manufacturing new covering outer wraps for mattresses, the size of the pieces being sufficiently large in order the defibered and cut off material obtained has a fluffy consistence. This blanket of defibered and cut off material has on its top part said thin layer of sponge rubber and the layer of textile fibre, all of them joined by die cut or by basting stitches, as explained before. Optionally, although preferably, the blanket of defibered and cut off material has in addition on its lower face, said interlining sheet also sufficiently joined together with the remaining layers.

### Short description of the drawings

These and other characteristics of the process, the machine and the product of said invention will be best understood from the following detailed description of an example of embodiment thereof, which is meant only for illustration and not for limiting the scope of the invention, said description including references to the appended drawings, in which:
Fig. 1 is a schematic side elevation view of a machine according to this invention, which in addition illustrates the process of this invention;
Fig. 2 is a diagram illustrating the different apparatuses and devices integrated by the machine of this invention, and of the subsequent steps which are carried out according to the process of the invention;
Fig. 3 is a schematic cross sectional part view of an outer wrap for covering a mattress or lap of the prior art which illustrates, compared with the object of this invention, the different separated layers of which it is composed; and
Fig. 4 is a schematic cross sectional part view of an auxiliary element for producing an outer wrap for covering a mattress according to this invention, which illustrates the different separated layers of which it is composed.

### Best embodiment of this invention

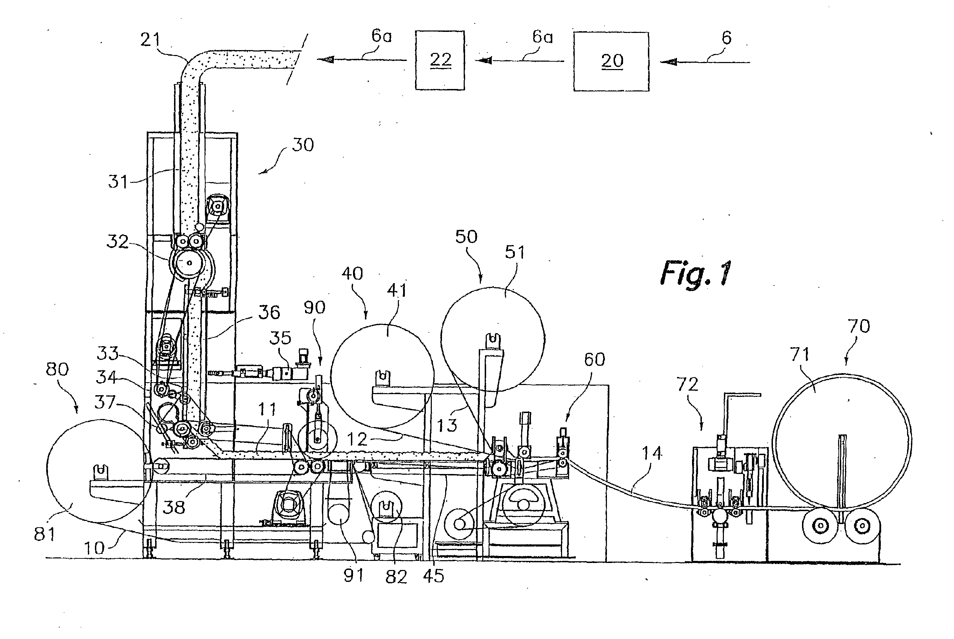

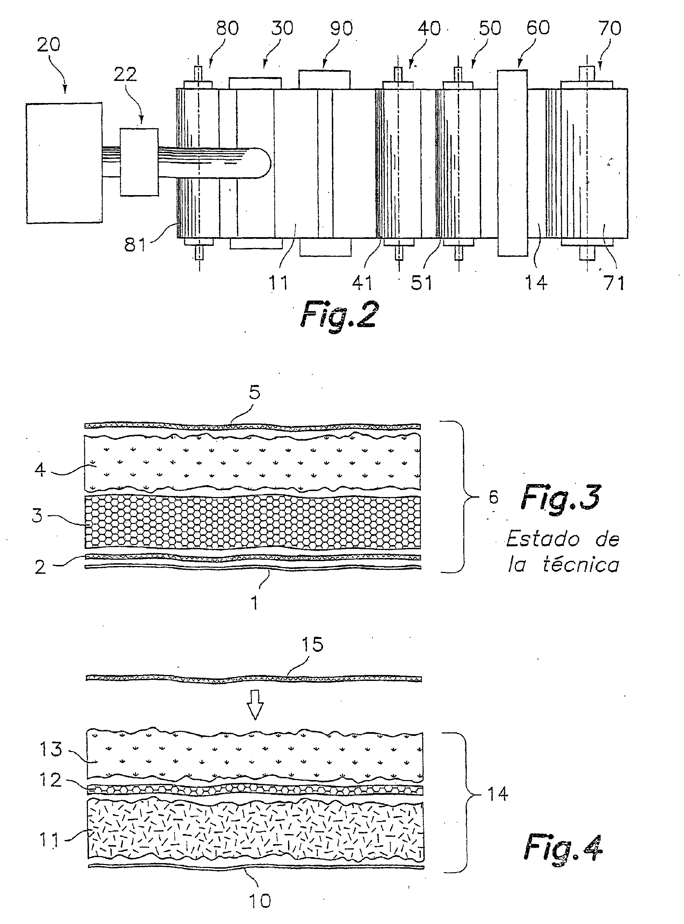

Referring first to Fig. 1 and 2, a machine according to this invention is schematically shown through the description of the parts of which the process of this invention will be explained. Numeral 20 is a defibering and cutting off machine, of the conventional type comprising, for example, a series of tangent rollers, having an adjustable distance, with prongs , between which the material to be treated passes associated to the machine of this invention, although strictly it is not a part of it.

The first step of the process consists in deferring and cutting off, in said deferring and cutting off machine 20, a material 6 coming from the recovery of used covering outer wraps of mattresses and/or the waste (mainly side cuts) of manufacturing new covering outer wraps for mattresses, said wraps including sponge rubber, until a size of the pieces of sponge rubber sufficiently large in order that the defibered and cut off 6a material obtained has a fluffy consistence, In fact, the starting material 6 comprises relatively thick layers of fluffy material, such as sponge material and textile fibre (which will be explained below with reference to Fig. 3) that if they were ground up to a too small size of particles would give as result an easily compactible material, lacking fluffiness, and on the contrary if they were cut off up to a size of pieces too large, maybe the individual pieces would be excessively noted when touching. For mere orientation purpose and depending on the quality and consistence of said fluffy material of material 6, a suitable size of the pieces of sponge rubber is ranging from 5 mm to 10 mm. At the exit of the defibering and cutting off machine 20 defibered and cut off material 6a is obtained which is an aggregate of the small pieces coming from the cutting off of all the layers of material 6.

Thereafter, and after a dedusting operation of said aggregate, the process comprises a step of laying the defibered and cut off material 6a obtained forming a blanket of defibered and cut off material 11 having the wished thickness to carry out the function of a layer of fluffy and heat insulating material in the auxiliary element for producing an outer wrap for covering a mattress object of this invention. For this, the defibered and cut off material 6a is lead through a duct 21 up to a feeding tower 30 for non stop laying said defibered and cut off material 6a forming a blanket of defibered and cut off material 11 having a wished thickness, on a linear conveyor such as a first travelling band 38. said feeding tower 30 is a well-known type such as those used in the carding machines and it comprises an upright tubular duct 31 of rectangular cross section, with a larger size approximately equivalent to the wished width of the auxiliary element 14. Interposed in said upright tubular duct 31, there is a unit of impelling cylinders 32 associated to an air impelling device for impelling and distributing the defibered and cut off material 6a downwards the lower part of said duct by means of a downward air stream within an end length of said upright tubular duct 31 provided with walls facing each other 33, 36 which delimits a smaller size thereof. said wall 33 is vibrating and is connected to a vibrating element 34 which makes it vibrates to prevent engorgements of the defibered and cut off material 6a within the duct 31, while the wall 36 is displaceable and is connected to a displacing regulating device 35 for regulating its separation with respect to said wall 33 in order to fit said smaller size of the duct 31 to the amount of defibered and cut off material 6a necessary for a wished thickness of the blanket of defibered and cut off material 6. At the lower end of the upright duct 31, there is a laying device 37 which serves for laying the defibered and cut off material 6a as said blanket of defibered and cut off material 11 having a wished thickness on said first travelling band 38.

The blanket of defibered and cut off material 11 is lead on the first travelling band 38 up to a cutting device 90 where a step of lengthwise cutting side edges of the blanket of defibered and cut off material 11 leaving it at the width wished for the auxiliary element 14. The defibered and cut off material in excess of the lengthwise cuts carried out by said cutting device 90 is absorbed by side aspirators 91 and it can be reused as defibered and cut off material 6a newly loaded in the feeding tower 30.

The process goes on with steps for depositing a thin layer of sponge rubber 12, such as polyurethane foam, on said blanket of defibered and cut off material 11 and depositing a layer of textile fibre 13, such as wadding, polyester, wool and cotton, having a wished thickness on said thin layer of sponge rubber 12, said steps are carried out respectively on a non stop feeder 40 of said thin layer of sponge rubber 12, coming from a coil 41, on said blanket of defibered and cut off material 11, and a non stop feeder 50 of said layer of textile fibre 13, coming from a coil 51, on said thin layer of sponge rubber 12.

The following step consists in consolidating a junction between said blanket of defibered and cut off material 11, said thin layer of sponge rubber 12 and said layer of textile fibre 13, for obtaining said auxiliary element 14, the degree of said junction being sufficient in order said auxiliary element 14 is handleable and can be joined thereafter at least to a covering fabric 15, for producing said outer wrap for covering the mattress 16, as it is described below with relation to Fig. 4. said consolidation of the junction is carried out in a consolidating device 60, which can be, in a possible embodiment, a die cut machine or a basting sewing machine or other usual consolidation system. It is preferred to use a die cut machine because with it tangling some fibres of some layers with the others is achieved which obtain a sufficient consolidation of the junction without needing to use threads which means an advantage as well from the technical and from the economic standpoint.

The three mentioned layers with their mutual consolidated junction constitute the auxiliary element for producing an outer wrap for covering the mattress in its more elementary way. However, because of the layer constituted by the blanket of the defibered and cut off material 11 remains at the exposed lower part, said layer can lose some particles or small pieces of those forming it. To prevent this drawback, before the step of consolidating the junction preferably a step consisting in laying an interlining sheet 10, such as an acetate sheet or the sheet marketed with the trade name Friselina® is laid under said blanket of defibered and cut off material 11, prior to the step of depositing the thin layer of sponge rubber 12 and the layer of textile fibre 13 on said blanket of defibered and cut off material 11, carrying thereafter said step of consolidating the junction with said interlining sheet 19 together with the remaining layers 11, 12, 13. For this, the machine of this invention comprises a non stop feeder 80 of said interlining sheet 10 coming from a coil 81, under said blanket of the defibered and cut off material 11 before the area where the feeders 40 and 50 respectively deposit the thin layer of sponge rubber 12 and the layer of textile fibre 13 on the blanket of defibered and cut off material 11. There exists a second travelling band 45 arranged coplanar after the first travelling band 38 in order it allows that said interlining sheet 10 is leaning against the lower face on the blanket of defibered and cut off material 11, having access through a separation gap between both the first and second travelling bands. Through said separation gap, other laminar materials can also be leaning against the lower face of the blanket of defibered and cut off material 11 said laminar material coming from , for example, the coil 82. In same way, in addition to the coils 41 and 51, other coils could be arranged for depositing other layers of laminar materials on the whole of the formerly described layers.

Last, it is proceeded to a step for coiling the auxiliary element 14 obtained in a non stop operation in a coil 71 of a coiler 70, which can be directly built in the machine of this invention or to be simply associated to it at the outlet of the consolidating device 60 completed by a cutting device 72. Alternatively, the auxiliary element obtained in a non stop operation can be cut by means of the device 72 into plates which are stacked on a pallet. The auxiliary element 14 is adapted for being thereafter joined at least to a covering fabric 15 (Fig. 4) for producing said outer wrap for covering the mattress 16. said junction is generally carried out by the manufacturers of mattresses sewing , with a conventional machine, which instead of been fed by different components or layers shown in Fig. 3, only the auxiliary element 14 or component of internal comfort and the covering fabric chosen 15 will be entered, producing a typical quilting on the laps of the mattress. This outer wrap for covering a mattress 6 is tailored cut for making the top, lower and side parts of the mattress lap and the material in excess of the cuts can be recycled towards the defibering and cutting off apparatus 20.

Now referring to Fig. 3, it shows a typical outer wrap for covering a mattress, or cover, of the prior art which constitutes the base material 6, either after separating it from the mattress at the end of the service life thereof, that is to say, used, or as waste from the manufacture of new outer wraps, from which base material is obtained in the defibering and cutting off apparatus 20 the defibered and cut off material 6a which constitutes an essential layer in the auxiliary element 14 of this invention. Fig. 3 shows the basic components of said wrap 6 or mattress lap: an interlining sheet of acetate or Friselina® 1 as a base layer, a layer of a light nonwoven fabric 2, a layer of sponge rubber 3, such as polyurethane foam having a variable thickness according to the kind of lap, a layer 4 of textile fibre chosen out of a group such as wadding, polyester, wool, cotton or similar materials, depending on the quality and services of the lap (for example: wool on the winter side and cotton on the summer face) and last, a fabric 5, for example Jacquard, sewn and which constitute a visible part of the lap.

Last, in Fig. 4, it can be seen for example purpose the characteristics of an auxiliary element provided by the invention, a layer of fabric 15 having been illustrated, related with an arrow to state that only by adding said layer a lap like the 6 of the prior art mentioned would be obtained. In the first case, the differentiating element is the layer 11 obtained as a blanket of defibered and cut off material 11 of a wished thickness, composed of a defibered and cut off material 6a obtained from a material 6 from the recovery of covering used outer wraps of mattresses and/or the waste of manufacturing new covering outer wraps for mattresses, said wraps including sponge rubber, the size of the pieces being sufficiently large in order the defibered and cut off material 6a has a fluffy consistence.

As it has been stated, said auxiliary element in general in addition comprises a thin layer of sponge rubber 12, such as polyurethane foam, arranged on said blanket of defibered and cut off material 11, and a layer of textile fibre 13 such as wadding, polyester, wool or cotton, having a wished thickness, arranged on said thin layer of sponge rubber 12, said material being selected depending on the quality and services of the lap to be obtained, said layers 11,12, 13 being joined to each other and advantageously supported and joined to an interlining sheet 10, such as acetate, arranged immediately under and into contact with said blanket of defibered and cut off material 11.

As it has been explained before, said junction between the layers 10, 11, 12 and 13 are consolidated by die cut or alternatively by basting stitches.

And said material (6) from the recovery of used covering outer wraps of mattresses and/or the waste resulting of manufacturing new covering outer wraps for mattress comprises, in general every and all the already detailed layers illustrated in Fig. 3.

## Claims

1. Process for manufacturing an auxiliary element for producing an outer wrap for covering a mattress, said outer wrap (6) is of the kind which contains at least a layer (3) of a fluffy and heat insulating material including sponge rubber having a variable thickness and a layer (4) of textile fibre selected out of a group comprising wadding, polyester, wool, cotton or others, joined to a covering fabric (5), said process being **characterized in that** it includes the steps of:
defibering and cutting off a material from the recovery of used covering outer wraps (6) for mattresses and/or waste of manufacturing new covering outer wraps (6) for mattresses, the cutting off being carried out until a size of pieces sponge rubber is obtained which is sufficiently large in order the defibered and cut off material (6a) obtained has a fluffy consistence;
laying the defibered and cut off material (6a) obtained forming a blanket of defibered and cut off material (11) having a wished thickness to carry out the function of said layer which is at least one of a fluffy and heat insulating material in said auxiliary element.
depositing a thin layer of sponge rubber (12) such as polyurethane foam on said blanket of defibered and cut off material (11);
depositing a layer of textile fibre (13) depending on the end finish wished out of the group comprising wadding, polyester, wool or cotton, having a wished thickness on said thin layer of sponge rubber (12); and
consolidating a junction between said blanket of defibered and cut off material (11), said thin layer of sponge rubber (12) and said layer of textile fibre (13), for obtaining said auxiliary element (14) so that it is handleable and can be thereafter joined to at least said covering fabric (15) for producing said outer wrap for covering the mattress (16).

2. Process, according to claim 1, **characterized in that** it include a step of arranging an interlining sheet (10), such as acetate, immediately under said blanket of defibered and cut off material (11), as support thereof, prior to the steps of depositing the thin layer of sponge rubber (12) and the textile fibre layer (13) on said blanket of defibered and cut off material (11), joining said interlining sheet (10) together with the remaining layers (11, 12, 13) in said step of consolidating the junction to each other.

3. Process, according to claim 1 or 2, **characterized in that** said step for consolidating the junction is carried out by die cut.

4. Process according to claim 1 or 2 **characterized in that** said step of consolidating the junction is carried out by slight sewing.

5. Process according to claim 1 or 2 **characterized in that** it comprises lengthwise cutting side edges of the blanket of defibered and cut off material (11) to leave it to the wished width for the auxiliary element (14) before further layers are added to it.

6. Process according to claim 1, **characterized in that** said material (6) from the recovery of used covering outer wraps of mattresses and/or waste of manufacturing new outer wraps for mattresses generally comprises all or some of following layers: an interlining sheet (1), such as acetate, as a base layer; a layer of light nonwoven fabric (2); a layer of sponge rubber (3) such as polyurethane foam having a variable thickness; a layer of textile fibre (4), such as wadding, polyester, wool or cotton, having a variable thickness; and a top layer of covering fabric (5), such as Jacquard fabric, joined by sewing them, said material (6) is used without separating said layers (1, 2, 3, 4, 5) in said cutting off and defibering step.

7. Process, according to any of the preceding claims, **characterized in that** the different steps are carried out in a non stop process and the auxiliary element (14) is obtained in a non stop operation, and it may be coiled in coils (71) in a coiling device (70) associated to a cutting device (72).

8. Process, according to any of the claims 1 to 6, **characterized in that** the different steps are carried out in a non stop process and the auxiliary element (14) is obtained in a non stop operation, being cut into plates by a cutting device (72).

9. Machine for manufacturing an auxiliary element for producing an outer wrap for covering a mattress, said outer wrap (6) to be obtained is of the kind which contains at least one layer (3) of a fluffy and heat insulating material including sponge rubber of a variable thickness and a layer (4) of textile fibre selected out of a group comprising wadding, polyester, wool, cotton or others, joined to a covering fabric (5) said machine being **characterized in that** it comprises:
a feeding tower (30) for a non-stop laying of a defibered and cut off material (6a) forming a blanket of defibered and cut off material (11) having a wished thickness, this defibered and cut off material (6a) comes from a defibering and cutting off apparatus (20) fed with a material (6) coming from the recovery of used covering outer wraps of mattresses and/or the waste of manufacturing new covering outer wraps for mattresses, said wraps including sponge rubber, said defibering and cutting off material (6a) has a size of the pieces of sponge rubber sufficiently large to offer a fluffy consistence to the defibered and cut off material (6a);
a non stop feeder (40) of a thin layer of sponge rubber (12) such as polyurethane foam from a coil (41), on said blanket of defibered and cut off material (11);
a non stop feeder (50) of a layer of textile fibre (13) selected out of the group comprising wadding, polyester, wool, cotton or similar materials having a wished thickness, from a coil (51) on said thin layer of sponge rubber (12); and
a consolidating device (60) for consolidating a junction between said blanket of defibered and cut off material (11), said thin layer of sponge rubber (12) and said layer of textile fibre (13), for obtaining said auxiliary element (14) which can be thereafter joined at least to said covering fabric (15) for producing said covering outer wrap for the mattress (16).

10. Machine, according to claim 9, **characterized in that** it comprises in addition a non stop feeder (80) of an interlining sheet (10), such as acetate, under said blanket of defibered and cut off material (11) before the area where the feeders (40 and 50) respectively deposit the thin layer of sponge rubber (12) and the textile fibre layer (13) on the blanket of defibered and cut off material (11), said interlining layer (10) entering together with the remaining layers (11, 12, 13) in said consolidating device (60) for consolidating the junction to each other of said layers.

11. Machine according to claim 9 or 10 **characterized in that** said consolidating device (60) is a die cut machine.

12. Machine according to claim 9 or 10 **characterized in that** said consolidating device (60) is a basting sewing machine.

13. Machine according to claim 9, **characterized in that** in addition it comprises a cutting device (90) for lengthwise cutting side edges of the blanket of defibered and cut off material to leave it with the wished width for the auxiliary element (14) said cutting device (90) being located in a location before the area where the feeders (40, 50) respectively deposit the thin layer of sponge rubber (12) and the layer of textile fibre (13) on said blanket of defibered and cut off material (11), said layers (12) and (13) already being of said wished width.

14. Machine according to claim 10, **characterized in that** in addition it comprises a cutting device (90) for lengthwise cutting side edges of the blanket of defibered and cut off material (11) leaving it at the width wished for the auxiliary element (14), said cutting device (90) being located in a location before the area where the feeder (80) deposits said interlining sheet (10) under said blanket of defibered and cut off material (11).

15. Machine, according to claim 9 or 10, **characterized in that** said feeding tower (30) comprises:
an upright tubular duct (31) of rectangular cross section, with a larger size approximately equivalent to the wished width of the auxiliary element (14).
a unit of impelling cylinders (32) interposed in said upright tubular duct (31) associated to an air impelling device which introduces and distributes the defibered and cut off material (6a) downwards the lower part of said duct (31) by means of a downward air stream;
an end length of said upright tubular duct (31) provided with walls facing each other (33, 36) which delimits a smaller size thereof, said wall (33) is vibrating and is connected to a vibrating element (34) which makes it vibrates to prevent engorgements of the defibered and cut off material (6a) within the duct (31), said wall (36) is displaceable and is connected to a displacing regulating device (35) for regulating its separation with respect to said wall (33) in order to fit said smaller size of the duct (31) to the amount of defibered and cut off material (6a) necessary for a wished thickness of the blanket of defibered and cut off material (6); and
a laying device (37) which serves for laying the defibered and cut off material (6a) as said blanket of defibered and cut off material (11) having a wished thickness on said first travelling band (38).

16. Machine according to claim 15 when depending from claim 10, **characterized in that** it comprises a second travelling band (45) between the area where the feeder (80) deposits said interlining sheet (10) under said blanket of defibered and cut off material (11) and the area where the feeders (40, 50) respectively deposit the thin layer of sponge rubber (12) and the layer of textile fibre (13) on said blanket of defibered and cut off material (11).

17. Machine according to claim 9 or 10, **characterized in that** said defibering cutting off apparatus (20) associated to the feeding tower (30) is adapted for defibering and cutting off said material (6) from the recovery of used covering outer wraps of mattresses and/or waste of manufacturing new outer wraps for mattresses which comprises in general all or some of the following layers: an interlining sheet (1), such as acetate, as a base layer; a layer of light nonwoven fabric (2); a layer of sponge rubber (3) such as polyurethane foam having a variable thickness; a layer of textile fibre (4), such as wadding, polyester, wool or cotton, having a variable thickness; and a top layer of covering fabric (5), such as Jacquard fabric, joined by sewing them, is used without prior separation of said layers (1, 2, 3, 4, 5).

18. Machine according to claim 9 or 10, **characterized in that** before the entrance to the feeding tower (30) a dedusting device (22) has been provided.

19. Machine according to the claim 9 or 10, **characterized in that** the consolidated material (14) is collected by a coiling device (70) for coiling said auxiliary element (14) obtained in a non stop operation in a coil (71), said device (70) having a cutting device (72) associated.

20. Machine according to claim 9 or 10, **characterized in that** the consolidated material (14) is divided into plates by means of a cutting device (72), said plates being arranged stacked on a pallet.

21. Auxiliary element for producing an outer wrap for covering a mattress, said outer wrap (6) being of the kind which contains at least one layer (3) of fluffy and heat insulating material including sponge rubber having a variable thickness and a layer (4) of textile fibre selected out of a group comprising wadding, polyester, wool, cotton or others, joined to a covering fabric (5) **characterized in that** it comprises said layer of a fluffy and heat insulating material as a blanket of defibered and cut off material (11) of a wished thickness, composed of a defibered and cut off material (6a) obtained from a material (6) from the recovery of used covering outer wraps of mattresses and/or the waste of manufacturing new covering outer wraps for-mattresses, the size of the pieces of sponge rubber being sufficiently large in order the defibered and cut off material (6a) has a fluffy consistence.

22. Auxiliary element, according to claim 21, **characterized in that** in addition it comprises a thin layer of sponge rubber (12), such as polyurethane foam, arranged on said blanket of defibered and cut off material (11) and a layer of textile fibre (13) such as wadding, polyester, wool or cotton, having a wished thickness arranged on said thin layer of sponge rubber (12) said layers (11, 12, 13) being joined to each other.

23. Auxiliary element according to claim 22 **characterized in that** in addition it comprises an interlining sheet (10), such as acetate, arranged under said blanket of defibered and cut off material (11) said interlining sheet (10) being joined to the remaining layers (11, 12, 13).

24. Auxiliary element, according to claim 21 or 22, **characterized in that** said junction is consolidated by die cut.

25. Auxiliary element, according to claim 21 or 22, **characterized in that** said junction is consolidated by means of basting stitches.

26. Auxiliary element according to claim 21, **characterized in that** said material obtained from the recovery of used covering outer wraps of mattresses and/or waste of manufacturing new covering outer wraps for mattresses in general comprises all or some of following layers: an interlining sheet (1), such as acetate, as a base layer; a layer of light nonwoven fabric (2); a layer of sponge rubber (3) such as polyurethane foam having a variable thickness; a layer of textile fibre (4), such as wadding, polyester, wool or cotton, having a variable thickness; and a top layer of covering fabric (5), such as Jacquard fabric, joined by sewing them.
